# FASCICULE DE BREVET EUROPEEN

(11) **EP 0 688 152 B1**
(45) Date de publication et mention de la délivrance du brevet: **28.08.1996**
(21) Numéro de dépôt: 95401362.9
(22) Date de dépôt: 12.06.1995
(51) Int. Cl.: H05B 41/29, H02M 7/538

(54) **Circuit de commande de commutation et dispositif de commande pour lampe fluorescente à basse pression**
Steuerungsschaltung und Anordnung für eine Niederdruckleuchtstofflampe
Circuit and device for operating a low pressure fluorescent lamp

(30) Priorité: 15.06.1994 FR 9407331
(43) Date de publication de la demande: 20.12.1995
(73) Titulaire: SGS-THOMSON MICROELECTRONICS S.A., F-94250 Gentilly (FR)
(72) Inventeur: Bildgen, Marco, F-94230 Cachan (FR)
(74) Mandataire: Schmit, Christian Norbert Marie

(56) Documents cités:
- EP-A- 0 274 303
- EP-A- 0 320 410
- EP-A- 0 430 357

## Description

L'invention concerne les dispositifs de commande des lampes fluorescentes à basse pression.

Ces lampes fluorescentes contiennent des gaz (néon, argon) à basse pression. Le comportement électrique d'une lampe fluorescente est similaire à celui d'une diode zener (avalanche), avec une résistance dans le gaz qui devient très faible et négative après le claquage. Des ions animés de vitesses importantes amènent par collision les atomes du gaz dans des états excités dans lesquels ces atomes émettent des raies lumineuses.

Un dispositif de commande de la lampe est nécessaire, qui comprend une source de courant. Mais pour éviter une migrations d'ions, il faut que les décharges en courant appliquées entre deux électrodes de la lampe passent dans un sens, puis dans l'autre, alternativement. On avait l'habitude d'utiliser une inductance comme dispositif de commande des décharges, mais le développement de l'électronique a conduit à utiliser des dispositifs de commande qui comprennent typiquement deux commutateurs électroniques à base de transistors de puissance alimentés en haute tension continue et un transformateur en courant pour commander ces dispositifs de commande à transistors. Un circuit résonnant comportant une inductance et une capacité applique un courant alternatif à la lampe fluorescente. Selon l'état de la technique, le transformateur est un transformateur à saturation, qui limite le courant dans la lampe par saturation de son noyau magnétique et entraîne la commutation des commutateurs des dispositifs de commande. Les commutateurs utilisent généralement des transistors bipolaires de puissance pour la commutation et avec des diodes en parallèle et en inverse pour passer le courant au moment des alternances, et différents éléments de protection, comme diodes et condensateurs.

Ces dispositifs à transformateur sont très encombrants et coûteux, car ils nécessitent beaucoup de composants et ne permettent que peu d'intégration. Par ailleurs, le temps de stockage des transistors bipolaires est une caractéristique très variable, par exemple prenant une valeur entre 2 et 7 microsecondes. Cette variation n'est pas négligeable devant le temps au bout duquel le transformateur sature pour une alternance de courant, de l'ordre de 3 microsecondes, pour une durée d'alternance de l'ordre de 10 microsecondes. Donc, le temps au bout duquel le transistor bipolaire devient non passant après saturation du transformateur dans une alternance varie de 5 à 10 microsecondes. Ceci est très gênant. En pratique, on effectue une mesure du temps de stockage de chaque transistor en sortie de fabrication pour le classer dans une famille correspondant à une fourchette étroite de valeurs, pour l'utiliser dans un dispositif de commande adapté par résistances à cette fourchette de valeurs. Tout ceci est fort pénalisant et très couteux.

EP 0 274 303 (Electricité de France) concerne un système de régulation d'un générateur onduleur à commutateurs alimentant une charge par induction, pour lequel on cherche à asservir en permanence la fréquence de la tension d'alimentation à une fréquence voisine de la fréquence propre de la charge.

Ce document décrit une boucle de régulation en fréquence qui comprend des capteurs de mesure de l'intervalle du temps τ2 entre le début de conduction d'une diode et l'instant d'annulation du courant de charge. En fonction de la valeur de τ2, des moyens de correction de fréquence corrigent la fréquence du signal de commande de l'onduleur.

EP 0 320 410 (MERLIN GERIN) concerne un dispositif de commande d'un interrupteur statique, pour lequel il faut introduire un temps mort fixe entre le blocage d'un des interrupteurs et la mise en conduction de l'autre.

Selon ce document, les transistors de puissance sont commandés par un circuit logique dont les sorties sont validées (portes ET) par un circuit de détection des instants de passage à zéro du courant dans la charge Z.

EP A-0 430 357 (Philips) concerne un contrôle de la puissance dans les lampes fluorescentes.

Selon ce document, pour résoudre ce problème, on intègre un détecteur de courant dans le circuit de charge de la lampe (inductance) et on connecte, sur les bornes du circuit de charge, un circuit de contrôle de cette puissance qui délivre un signal de commande approprié vers la logique de commande des interrupteurs de puissance, pour modifier la fréquence et le temps de conduction de chaque transistor.

Un objet de l'invention est de supprimer le transformateur en courant. Selon l'invention, on utilise une mesure du courant dans les commutateurs pour commander alternativement ces commutateurs.

Un autre objet de l'invention est de proposer un dispositif de commande simple et monolithiquement intégrable, c'est à dire que le commutateur et le circuit de commande peuvent être sur une même puce.

Telle que caractérisée, l'invention concerne un circuit de commande de commutation pour lampe fluorescente à basse pression. Selon l'invention un circuit de commande de commutation d'un transistor de puissance et d'une diode montée en inverse entre deux électrodes dudit transistor, un circuit de détection de la tension aux bornes de la diode et du transistor pour commander l'état passant dudit transistor lorsque cette tension est inférieure à une valeur de référence de tension et un circuit de mesure du courant passant dans ledit transistor pour commander l'état bloqué dudit transistor lorsque l'intégrale de ce courant est supérieure à une valeur de référence de courant.

L'invention concerne aussi un dispositif de commande de lampe fluorescente à basse pression. Ce dispositif de commande d'une lampe fluorescente à basse pression comprend deux circuits de commande de commutation d'un transistor de puissance selon l'invention placés en série entre une haute tension et la masse. Une inductance, la lampe fluorescente à basse pression et un condensateur sont montés en série entre le point milieu des deux circuits de commutation et la masse. Un condensateur de démarrage (Cp) est prévu en parallèle sur la dite lampe.

D'autres caractéristiques et avantages de l'invention sont présentés dans la description jointe, faite à titre indicatif et non limitatif de l'invention et en référence aux dessins annexés, dans lesquels :
- la figure 1 est un schéma-bloc d'un dispositif de commande d'une lampe fluorescente à basse pression selon l'invention;
- la figure 2 est un schéma détaillé d'un circuit de commande de commutation selon l'invention, utilisé dans le dispositif de commande représenté à la figure 1 et
- la figure 3 représente les courbes de tension et de courant aux bornes d'un circuit de commande de commutation selon l'invention, tel qu'utilisé dans le dispositif de commande représenté à la figure 1.

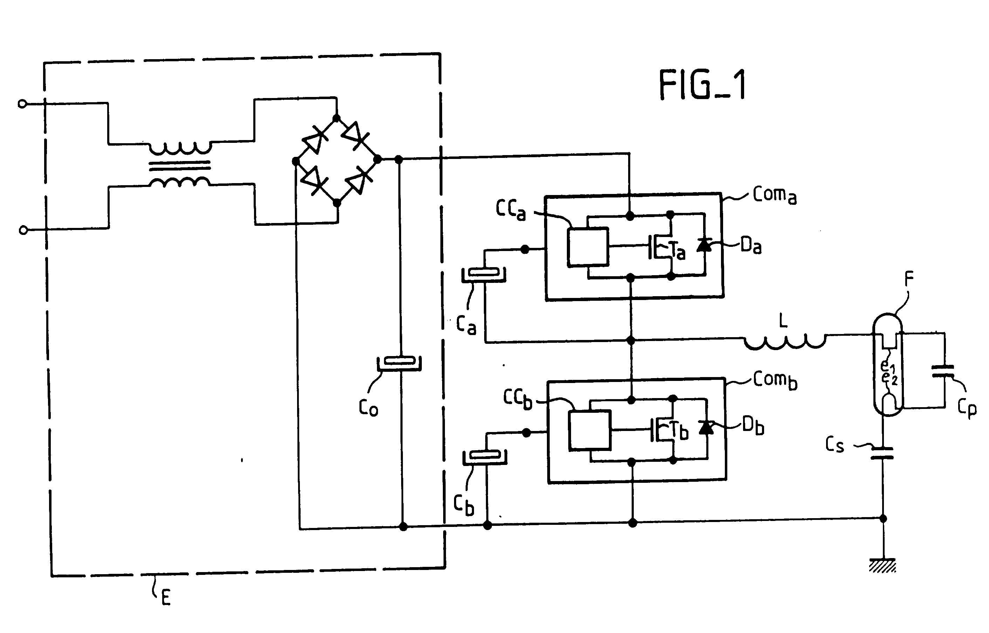

La figure 1 représente un dispositif de commande selon l'invention.

Il comporte principalement deux circuits Comₐ et Com_{b} placés en série entre une haute tension et la masse. Dans l'exemple la haute tension est fournie par un étage E d'alimentation à redresseur et capacité de filtrage C0 qui maintiennent une tension d'alimentation de l'ordre de 300V.

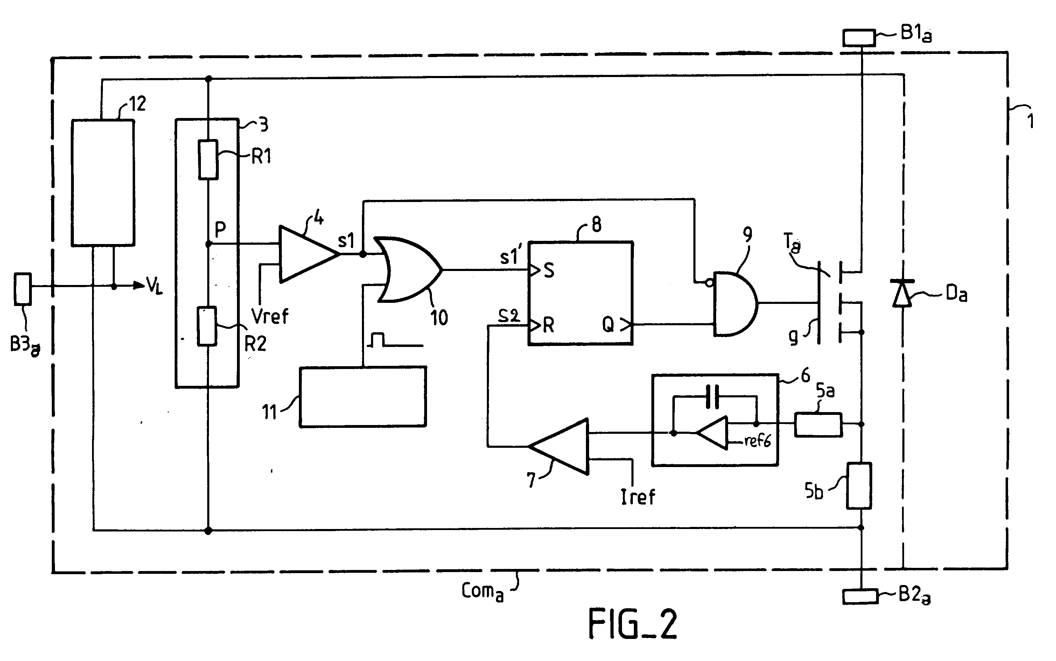

Les circuits Comₐ et Com_{b} seront détaillés dans la suite en relation avec la figure 2. Ils comportent trois bornes externes notées B1ₐ, B2ₐ, B3ₐ pour le circuit Comₐ et B1_{b}, B2_{b}, B3_{b} pour le circuit Com_{b}. Les bornes B1ₐ et B2ₐ (respectivement B1_{b} et B2_{b}) sont les bornes de connexion du circuit. La borne B3ₐ (respectivement B3_{b}) est une borne de découplage de l'alimentation logique du circuit.

Les bornes B3ₐ et B3_{b} sont chacunes reliées à un condensateur de découplage Cₐ et C_{b} connecté au point de référence du circuit, soit B2ₐ et B2_{b}. Le rôle de ces condensateurs est de maintenir le niveau de la tension logique interne des circuits Comₐ et Com_{b} quand ils ont une tension nulle entre leurs bornes de connexion B1ₐ et B2ₐ, B1_{b} et B2_{b}.

Les circuits Comₐ et Com_{b} comprennent principalement un transistor de puissance Tₐ et T_{b} et son circuit de commande de commutation (CCₐ et CC_{b}), entre les deux bornes de connexion B1ₐ et B2ₐ, B1_{b} et B2_{b}. Le circuit de commande de commutation commande la grille ga, gb du transistor de puissance associé. Une diode Dₐ, D_{b} est placée en parallèle et en inverse sur le transistor Ta, Tb.

Le point milieu M entre les deux circuits Comₐ et Com_{b} est connecté à une borne d'une inductance L connectée sur l'autre borne à une première électrode e1 d'une lampe fluorescente à basse pression F. L'autre électrode e2 de la lampe est connectée à un condensateur Cs relié à la masse. L'inductance L, la lampe F et le condensateur Cs sont donc montés en série entre le point milieu M et la masse, et forment un circuit oscillant.

Enfin, un condensateur de démarrage Cp est monté en parallèle sur la lampe.

Le principe général de fonctionnement du dispositif va maintenant être expliqué. Le courant passe dans la lampe F tantôt dans un sens, puis dans l'autre. Ce courant passe par exemple dans une première période par le transistor de puissance Tₐ qui est alors passant, du circuit Comₐ qui est à l'état fermé : il a une tension nulle entre ses bornes B1ₐ et B2ₐ, toute la haute tension se retrouvant aux bornes de l'autre circuit Com_{b}. Quand le circuit de commande de commutation détecte que suffisamment de courant est passé dans le transistor, il commande- l'état ouvert du circuit Comₐ, en bloquant son transistor de puissance Tₐ: le courant dans la lampe passe alors dans l'autre circuit Com_{b}, par la diode Db montée en parallèle et en inverse. La tension aux bornes de cette diode devient négative par rapport au point de référence B2_{b} du circuit. Le circuit de commande CC_{b} détecte cette chute de tension aux bornes de la diode et commande l'état passant du transistor de puissance associé T_{b} : Le circuit résonnant extérieur fera changer le sens du courant qui pourra maintenant passer par le commutateur en état passant, et ainsi de suite.

Les deux circuits Comₐ et Com_{b} fonctionnent donc de manière indépendante, chacun détectant une chute de tension à ses bornes pour se mettre à l'état fermé et détectant que suffisamment de courant est passé entre ses bornes pour se mettre à l'état ouvert.

Le critère de courant correspond à la puissance nominale de la lampe à commander. On fait ainsi correspondre une valeur de référence de courant à la puissance nominale de la lampe, et la détection de courant consiste à mesurer et comparer la surface de courant passée dans le transistor sur une alternance à cette valeur de référence de courant.

Pour le démarrage de la lampe, on rappelle que l'on utilise classiquement le condensateur de démarrage Cp qui court-circuite la lampe. La surtension sur le condensateur de démarrage provoque le claquage du gaz dans la lampe, et tout le courant passe alors par la lampe : c'est le condensateur de démarrage qui est alors court-circuité, et le circuit de résonnance comprend ensuite seulement le condensateur en série avec la lampe et l'inductance.

La figure 2 est un schéma détaillé du circuit Comₐ comprenant le circuit de commande de commutation CCₐ et le transistor de puissance Ta selon l'invention. Il comprend trois bornes de connexion externe : deux bornes de connexion B1ₐ et B2ₐ et une troisième borne de découplage B3ₐ de l'alimentation logique Vl.

Le transistor de puissance Tₐ est connecté entre les bornes B1ₐ et B2ₐ, avec une diode Da montée en parallèle et en inverse. Ainsi, le drain du transistor et la cathode de la diode sont connectés à la borne B1ₐ et la source du transistor et l'anode de la diode sont connectées à la borne B2ₐ.

Le circuit de commande de commutation comprend un circuit de détection d'une tension aux bornes de la diode et du transistor supérieure ou inférieure à une valeur de référence de tension Vref et un circuit de mesure du courant passant dans le transistor pour déterminer une surface de courant supérieure ou inférieure à une valeur de référence de courant Iref.

Le circuit de détection de tension comprend un diviseur résistif 3 comprenant dans l'exemple deux éléments résistifs notés R1 et R2 placés en série entre la première borne B1ₐ et la deuxième borne B2ₐ. Les éléments résistifs peuvent être des diffusions ou un transistor en saturation par exemple. Ce diviseur résistif a notamment pour objet de réduire l'excursion en tension entre les deux bornes, car elle peut être de cinq cent volts dans l'exemple, pour la réduire à un niveau logique par exemple de l'ordre de 15 volts, acceptable par un circuit logique.

Le point milieu P entre les deux éléments résistifs est connecté sur une entrée d'un comparateur de tension 4, qui reçoit sur une autre entrée une référence de tension Vref. Dans l'exemple, on veut détecter une tension pratiquement nulle : La référence de tension est une tension proche de zéro volts.

Le comparateur de tension délivre en sortie un signal de détection d'une tension supérieure ou inférieure à la référence de tension s1, qui sert à commander la grille du transistor de puissance Tₐ.

Le circuit de mesure de courant comprend un circuit de dérivation de courant qui comprend dans l'exemple deux charges résistives. Une première 5a est placée entre le transistor de puissance et l'entrée d'un intégrateur 6. Une autre 5b est placée entre le transistor de puissance et le point de référence B2ₐ.

D'autres circuits de dérivation sont envisageables. Par exemple, comme le transistor de puissance est composé de millions de cellules MOSFET, on peut aussi prévoir une quatrième borne sur ce transistor pour dériver le courant de quelques cellules seulement : le rapport du courant total au courant dérivé de cette manière est en effet très précis. On connecte alors cette quatrième borne de dérivation à une charge résistive en série avec l'intégrateur.

L'intégrateur 6 peut être un simple filtre passe-bas RC. Il peut aussi utiliser, comme représenté sur la figure 2, un amplificateur opérationnel monté en intégrateur, avec une entrée recevant le courant dérivé par la charge 5 et une entrée connectée à une référence ref6, qui dépend classiquement de l'excursion en tension sur la première entrée, comme cela est bien connu de l'homme du métier. Enfin une capacité est montée en parallèle sur cette première entrée et la sortie de l'amplificateur.

Un comparateur 7 reçoit la sortie de l'intégrateur ainsi qu'une valeur de référence de courant Iref, calculée selon la puissance nominale de la lampe et en fonction de la charge de dérivation du courant. Dans un exemple, pour une lampe de 7 watts, la valeur de référence de courant peut être de l'ordre de cent milliampères, selon la charge de dérivation. La sortie du comparateur de courant 7 fournit le signal de détection de courant s2 qui sert à commander la grille du transistor de puissance Tₐ.

Les signaux s1 et s2 sont appliqués à un circuit logique qui élabore la commande en tension de la grille. On a vu qu'il faut bloquer le transistor sur détection d'une surface du courant passé dans le transistor suffisante, information donnée par le signal s2, et rendre passant le transistor sur détection d'une tension nulle aux bornes de la diode (donc du transistor), information donnée par le signal s1.

Dans l'exemple, le circuit logique comprend une bascule bistable de type RS, avec une entrée S de mise à un, commandée par le signal de détection d'une tension s1 et une entrée de mise à zéro, commandée par le signal de détection de courant s2. Dans l'exemple préféré d'un transistor de puissance de type MOSFET à canal N, il faut une tension de l'ordre de quinze volts sur la grille pour le rendre passant et de l'ordre de zéro volt pour le bloquer. Ainsi, si on détecte une tension nulle, on commande une tension logique de l'ordre de quinze volts sur la grille gₐ du transistor de puissance et si on détecte suffisamment de courant, on commande une tension logique de l'ordre de zéro volt sur la grille du transistor de puissance.

Par mesure de protection, il est préférable de pouvoir bloquer le transistor dans le cas où on aurait une tension positive sur la borne B1ₐ, alors que la sortie de détection de courant n'est plus à un (c'est à dire, quand le courant passe dans l'autre commutateur). Pour cela, on prévoit que le circuit logique comporte en outre une porte logique 9, de type ET dans l'exemple, pour forcer dans ce cas la grille g du transistor à zéro volt, quelle que soit la sortie de détection de courant. Dans l'exemple, la porte logique reçoit en entrée la sortie Q de la bascule bistable et le signal de détection de tension inversé /s1. La porte logique peut par exemple avoir une entrée inverseuse, ou un inverseur peut être prévu en série entre la sortie du comparateur et l'entrée de cette porte logique 9.

Enfin, le circuit logique comprend de préférence un circuit de démarrage comportant une porte logique 10 et un générateur d'une impulsion aléatoire 11. La porte logique 10 est dans l'exemple une porte OU recevant en entrée le signal de détection d'une tension s1 et la sortie du générateur d'une impulsion aléatoire 11. Ce générateur 11 délivre une impulsion au bout d'un certain temps aléatoire après la mise sous tension. La porte logique 10 délivre en sortie un signal s1' de commande de l'entrée de mise à un de la bascule bistable 8. Le but de ce circuit de démarrage est de pouvoir forcer la détection de tension au niveau correspondant à la détection d'une tension nulle quand l'impulsion est émise, pour obliger le circuit de commande de commutation à commander dans l'état fermé (transistor passant). L'intérêt, pour un dispositif utilisant deux circuits Comₐ et Com_{b} selon l'invention est de forcer l'un des deux à l'état fermé, celui pour lequel l'impulsion sera générée en premier, pour faire partir le dispositif. Sinon, la tension se répartie entre les deux circuits Comₐ et Com_{b} et le système ne démarre pas.

Cependant, quand un générateur a envoyé en premier son impulsion, l'autre doit être bloqué. Selon l'invention, on le fait simplement en envoyant la sortie Q de la bascule sur une entrée R de mise à zéro du générateur. Comme une demi-période de commutation est de l'ordre de 10 microsecondes, on prévoit que l'impulsion survient dans un laps de temps plus grand.

Le générateur d'impulsion aléatoire peut par exemple utiliser un courant de fuite dans une jonction de semi-conducteur, dont on sait qu'il varie d'un circuit intégré à un autre du fait des variations intrinsèques au procédé de fabrication, et qui ne sont pas contrôlables, pour charger une capacité qui délivrera l'impulsion aléatoire. Le courant de fuite peut par exemple varier de 1 nanoampère à 1 milliampère. La survenance de l'impulsion peut ainsi se produire aléatoirement après 0,1 à 100 millisecondes après la mise sous tension.

Enfin, un dispositif d'alimentation logique 12 est prévu pour générer une tension logique Vl de l'ordre de quinze volts pour commander les différents circuits logiques (intégrateur, comparateur et autres) et fournir la tension de grille de l'ordre de quinze volts nécessaire pour rendre le transistor de puissance passant.

En pratique, la diode en parallèle sur le transistor de puissance et en inverse est une diode parasite du transistor, donc interne à sa structure et le circuit de commande contrôle donc d'une part la tension aux bornes de la diode (donc du transistor) et le courant passant dans le transistor.

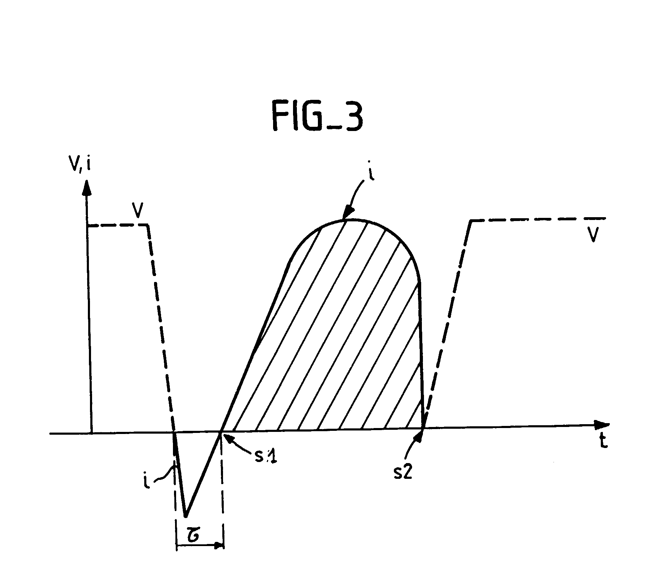

La figure 3 représente les courbes de tension et de courant en fonction du temps pour une alternance, pour le dispositif de commande de la figure 1 utilisant les circuits Comₐ et Com_{b} détaillés sur la figure 2.

On part d'un état ouvert du circuit Comₐ (transistor de puissance Tₐ bloqué) : on retrouve toute la haute tension aux bornes du transistor, et aucun courant. Puis, correspondant au moment où l'autre circuit Com_{b} va se mettre à l'état ouvert, le courant de la lampe qui doit continuer à passer quelque part, passe dans la diode Da en parallèle sur le transistor Tₐ, qui est alors polarisée en inverse : cela correspond à la partie négative de la courbe du courant sur la figure 3. Le passage du courant dans la diode fait chuter la tension à ses bornes B1ₐ et B2ₐ à une tension proche de zéro (tension de seuil de la diode). Cette chute de tension est détectée par le circuit de détection de la tension qui commande l'état passant du transistor : le circuit Comₐ passe à l'état fermé. Dans le même temps, l'autre circuit Com_{b} s'étant mis à l'état ouvert, le circuit oscillant se démagnétise : le courant négatif remonte progressivement vers zéro. Le courant change alors de sens pour devenir positif dans le circuit Comₐ, conduit par le transistor de puissance Tₐ. Ce courant est mesuré par le circuit de mesure du courant. Quand suffisamment de courant est passé, correspondant à la puissance nominale de la lampe, le circuit de mesure du courant détecte cette occurrence (s2) et commande l'état bloqué du transistor : le circuit Comₐ passe à l'état ouvert et on retrouve toute (ou presque toute) la haute tension à ses bornes ( à la tension de seuil de la diode de l'autre circuit Com_{b} près, négligeable).

Selon l'invention, on retrouve donc toute la tension aux bornes de l'un ou l'autre circuit Comₐ ou Com_{b}, alternativement, et les alternances sont contrôlées par la mesure de la surface de courant.

De préférence, pour n'intégrer que la partie positive du courant, la commande à l'état passant du transistor ne se fait qu'après un petit temps τ connu, qui correspond à la démagnétisation du circuit résonnant de la lampe.

Pour cela, on peut utiliser un monostable en sortie du comparateur (non représenté). Et on prévoit que le signal de détection de tension commande aussi le début de l'intégration (non représenté).

Le circuit comprenant le transistor de puissance et son circuit de commande de commutation selon l'invention se présente avantageusement sous forme d'un petit circuit intégré à trois broches. Il en faut deux pour un dispositif de commande selon l'invention. Ils sont indifférenciés dans le dispositif, car complètement indépendant et isolés l'un de l'autre : en interne, ils ne regardent que le courant qui passe dans le transistor et la tension aux bornes.

La seule particularisation, concerne la définition du courant de référence qui varie selon la puissance nominale de la lampe fluorescente à basse pression à commander (7, 12 ou 18 watts par exemple).

## Revendications

1. Circuit de commande de commutation d'un transistor de puissance (Tₐ) et d'une diode (Dₐ) montée en inverse entre deux électrodes dudit transistor, caractérisé en ce qu'il comprend un circuit de détection de la tension aux bornes (B1ₐ, B2ₐ) de la diode pour commander l'état passant dudit transistor (Tₐ) lorsque cette tension est inférieure à une valeur de référence de tension (Vref) et un circuit de mesure du courant passant dans ledit transistor (Tₐ) pour commander l'état bloqué du dit transistor lorsque l'intégrale de ce courant est supérieure à une valeur de référence de courant (Iref).

2. Circuit de commande de commutation selon la revendication 1, caractérisé en ce que ladite diode est une diode parasite dudit transistor (Tₐ).

3. Circuit de commande de commutation selon la revendication 1 ou 2, caractérisé en ce que le circuit de détection de tension comprend un diviseur résistif (3) connecté entre les deux électrodes dudit transistor et un comparateur de tension (4) connecté en entrée en un point (P) du diviseur résistif (3) et recevant sur une autre entrée la valeur de référence de tension (Vref), pour délivrer en sortie un signal (s1) de détection d'une tension supérieure ou inférieure à la valeur de référence de tension.

4. Circuit de commande de commutation selon l'une des revendications 1 à 3, caractérisé en ce que le circuit de mesure de courant comprend un circuit de dérivation de courant (5ₐ, 5_{b}), un intégrateur (6) et un comparateur de courant (7), le circuit de dérivation de courant (5a, 5b) comprenant un élément résistif (5a) connecté en entrée à une électrode dudit transistor (Tₐ) et en sortie sur l'entrée de l'intégrateur (6), le comparateur de courant (7) recevant sur une entrée la valeur de référence de courant (Iref) et sur une autre entrée la sortie de l'intégrateur (6), pour délivrer en sortie un signal (s2) de détection d'une surface de courant supérieure ou inférieure à la valeur de référence de courant (Iref).

5. Circuit de commande de commutation selon la revendication 4, caractérisé en ce qu'il comprend un circuit logique (8,9,10) recevant sur une entrée le signal (s1) de détection de tension et sur une autre entrée le signal (s2) de détection de courant, qui fournit en sortie un niveau de tension sur la grille (g) dudit transistor (Tₐ) pour le rendre passant pour un signal de détection d'une tension inférieure à la référence (Vref) de tension et bloqué pour un signal de détection d'une surface de courant supérieure à ladite référence de courant (Iref).

6. Circuit de commande de commutation selon la revendication 3 ou 5, caractérisé en ce qu'il comprend en outre un circuit de génération d'une impulsion aléatoire (11), l'occurrence de l'impulsion forçant le signal de détection de tension (S1) à un état correspondant à une tension inférieure à la référence de tension (Vref) pour rendre passant ledit transistor (Tₐ).

7. Circuit de commande de commutation selon la revendication 5 ou 6, caractérisé en ce que le circuit logique comprend une bascule bistable (8), recevant le signal (s1') de détection de tension sur une entrée de mise à un (S) de la sortie (Q) de la bascule et le signal (s2) de détection de courant sur une entrée de mise à zéro (R) de la sortie (Q) de la bascule (8).

8. Circuit de commande selon la revendication 7, caractérisé en ce que la sortie de la bascule (8) commande la remise à zéro du générateur d'impulsion aléatoire (11).

9. Circuit de commande de commutation selon la revendication 6 ou 7, caractérisé en ce que le circuit logique comprend en outre une porte ET (9) sur la sortie (Q) de la bascule (8) et qui reçoit sur une autre entrée le signal inversé (/s1) de détection de niveau de tension, pour forcer la tension de grille dudit transistor (Tₐ) à un niveau logique zéro et bloquer ledit transistor pour une détection d'une tension supérieure à la référence de tension (Vref).

10. Circuit de commande de commutation selon l'une des revendications 6 à 9, caractérisé en ce qu'il comprend une porte OU (10) recevant le signal de détection de tension (s1) et la sortie du générateur d'impulsion aléatoire (11) et délivrant la commande (s1') de mise à un (S) de la bascule (8).

11. Circuit de commande de commutation selon l'une quelconque des revendications précédentes, caractérisé en ce qu'il comprend un circuit de génération (12) d'une tension logique (V_{L}) à partir de la tension entre les deux électrodes dudit transistor, et qui délivre la tension logique sur une borne (B3) d'alimentation logique du circuit de commande de commutation .

12. Circuit de commande de commutation selon l'une quelconque des revendications précédentes, caractérisé en ce que le transistor de puissance est un transistor MOSFET.

13. Circuit intégré, caractérisé en ce qu'il comporte le transistor, la diode et le circuit de commande de commutation selon l'une quelconque des revendications précédentes.

14. Dispositif de commande d'une lampe fluorescente à basse pression (F), caractérisé en ce qu'il comprend deux circuits de commande de commutation (Comₐ, Com_{b}) d'un transistor de puissance (Tₐ, T_{b}) selon l'une quelconque des revendications précédentes, placés en série entre une haute tension et la masse, une inductance (L), la lampe fluorescente à basse pression (F) et un condensateur (Cs) étant montés en série entre le point milieu (M) des deux circuits de commutation (Comₐ, Com_{b}) et la masse et un condensateur de démarrage (Cp) étant prévu en parallèle sur la dite lampe (F).

15. Dispositif de commande selon la revendication 14, caractérisé en ce que pour chaque circuit de commande de commutation (Comₐ), un condensateur de découplage (Cₐ) est connecté entre la borne d'alimentation logique (B3ₐ) et la masse pour maintenir le niveau de tension logique (V_{L}) tout le temps que le circuit de commande de commutation correspondant (comₐ) est à l'état fermé.

## Patentansprüche

1. Schaltung zum Steuern der Umschaltung eines Leistungstransistors (Tₐ) und einer in Sperrichtung zwischen zwei Elektroden dieses Transistors angeordneten Diode (Dₐ), gekennzeichnet durch eine Schaltung zum Erfassen der Spannung an den Klemmen (B1ₐ, B2ₐ) der Diode, um den Transistor (Tₐ) in den leitenden Zustand zu steuern, wenn diese Spannung kleiner ist als ein Spannungs-Referenzwert (Vref), und eine Schaltung zum Messen des in dem Transistor (Tₐ) fließenden Stromes, um den Transistor in den Sperrzustand zu steuern, wenn das Integral dieses Stroms größer ist als ein Strom-Referenzwert (Iref).

2. Schaltung zum Steuern der Umschaltung nach Anspruch 1, dadurch gekennzeichnet, daß die Diode eine parasitäre Diode des Transistors (Tₐ) ist.

3. Schaltung zum Steuern der Umschaltung nach Anspruch 1 oder 2, dadurch gekennzeichnet, daß die Spannungserfassungsschaltung einen Widerstandsteiler (3), der zwischen den beiden Elektroden des Transistors verschaltet ist, und einen Spannungsvergleicher (4), der am Eingang mit einem Punkt (P) des Widerstandsteilers (3) verbunden ist und an einem anderen Eingang den Spannungs-Referenzwert (Vref) empfängt, um am Ausgang ein Signal (s1) der Erfassung einer Spannung größer als oder kleiner als der Spannungs-Referenzwert abzugeben, umfaßt.

4. Schaltung zum Steuern der Umschaltung nach einem der Ansprüche 1 bis 3, dadurch gekennzeichnet, daß die Strommeßschaltung eine Stromableitschaltung (5ₐ, 5_{b}), einen Integrator (6) und einen Stromvergleicher (7) umfaßt, wobei die Stromableitschaltung (5ₐ, 5_{b}) ein Widerstandselement (5ₐ) umfaßt, welches am Eingang mit einer Elektrode des Transistors (Tₐ) verbunden und am Ausgang auf den Eingang des Integrators (6) geschaltet ist, und der Stromvergleicher (7) an einem Eingang den Strom-Referenzwert (Iref) und an einem anderen Eingang das Ausgangssignal des Integrators (6) empfängt, um am Ausgang ein Signal (s2) der Erfassung einer Stromfläche größer als oder kleiner als der Strom-Referenzwert (Iref) abzugeben.

5. Schaltung zum Steuern der Umschaltung nach Anspruch 4, gekennzeichnet durch eine an einem Eingang das Spannungserfassungssignal (s1) und an einem anderen Eingang das Stromerfassungssignal (s2) empfangende Logikschaltung (8, 9, 10), die am Ausgang ein Spannungsniveau am Gate (g) des Transistors (Tₐ) bereitstellt, um diesen für ein Signal der Erfassung einer Spannung kleiner als die Referenzspannung (Vref) in den leitenden Zustand zu versetzen und für ein Signal der Erfassung einer Stromfläche größer als der Referenzstrom (Iref) zu sperren.

6. Schaltung zum Steuern der Umschaltung nach Anspruch 3 oder 5, dadurch gekennzeichnet, daß sie ferner eine Schaltung zum Erzeugen eines Zufallsimpulses (11) umfaßt, wobei das Auftreten des Impulses das Spannungserfassungssignal (s1) in einen Zustand bringt, der einer Spannung kleiner als die Referenzspannung (Vref) entspricht, um den Transistor (Tₐ) in den leitenden Zustand zu versetzen.

7. Schaltung zum Steuern der Umschaltung nach Anspruch 5 oder 6, dadurch gekennzeichnet, daß die Logikschaltung ein bistabiles Kippglied (8) umfaßt, welches das Spannungserfassungssignal (s1) an einem Eingang (S) zum Setzen des Ausgangs (Q) des Kippglieds und das Stromerfassungssignal (s2) an einem Eingang (R) zum Rücksetzen des Ausgangs (Q) des Kippglieds (8) empfängt.

8. Schaltung zum Steuern der Umschaltung nach Anspruch 7, dadurch gekennzeichnet, daß der Ausgang des Kippglieds (8) das Rücksetzen aufNull des Zufallsimpulsgenerators (11) steuert.

9. Schaltung zum Steuern der Umschaltung nach Anspruch 6 oder 7, dadurch gekennzeichnet, daß die Logikschaltung außerdem ein UND-Tor (9) am Ausgang (Q) des Kippglieds (8) umfaßt, welches an einem anderen Eingang das Spannungspegelerfassungs-Umkehrsignal (/s1) empfängt, um die Gatespannung des Transistors (Tₐ) auf einen Pegel logisch Null zu bringen und den Transistor für eine Erfassung einer Spannung größer als die Referenzspannung (Vref) zu sperren.

10. Schaltung zum Steuern der Umschaltung nach einem der Ansprüche 6 bis 9, gekennzeichnet durch ein ODER-Tor (10), welches das Spannungserfassungssignal (s1) und das Ausgangssignal des Zufallsimpulsgenerators (11) empfängt und den Befehl (S1') zum Setzen (S) des Kippglieds (8) abgibt.

11. Schaltung zum Steuern der Umschaltung nach einem der vorangehenden Ansprüche, gekennzeichnet durch eine Schaltung (12) zum Erzeugen einer Logikspannung (V_{L}) aus der Spannung zwischen den beiden Elektroden des Transistors, welche die Logikspannung an einer Logik-Versorgungsklemme (B3) der Umschalt-Steuerschaltung abgibt.

12. Schaltung zum Steuern der Umschaltung nach einem der vorangehenden Ansprüche, dadurch gekennzeichnet, daß der Leistungstransistor ein MOSFET-Transistor ist.

13. Integrierte Schaltung, dadurch gekennzeichnet, daß sie den Transistor, die Diode und die Schaltung zur Steuerung der Umschaltung nach einem der vorangehenden Ansprüche umfaßt.

14. Vorrichtung zum Steuern einer Niederdruck-Leuchtstofflampe (F), gekennzeichnet durch zwei Schaltungen (Comₐ, Com_{b}) zum Steuern der Umschaltung eines Leistungstransistors (Tₐ, T_{b}) nach einem der vorangehenden Ansprüche, die in Reihe zwischen einer hohen Spannung und der Masse angeordnet sind, wobei eine Induktivität (L), die Niederdruck-Leuchtstolllampe (F) und ein Kondensator (Cs) in Reihe zwischen dem Mittenpunkt (M) der beiden Umschalt-Schaltungen (Comₐ, Com_{b}) und der Masse angeordnet sind und ein Anlaßkondensator (Cp) parallel zu der Lampe (F) vorgesehen ist.

15. Vorrichtung zur Steuerung nach Anspruch 14, dadurch gekennzeichnet, daß für jede Schaltung (Comₐ) zum Steuern der Umschaltung ein Entkoppel-Kondensator (Cₐ) zwischen der Logik-Versorgungsklemme (B3ₐ) und der Masse verschaltet ist, um den Pegel der Logikspannung (V_{L}) während der gesamten Zeit, während der die entsprechende Schaltung (Comₐ) zum Steuern der Umschaltung im geschlossenen Zustand ist, aufrechtzuerhalten.

## Claims

1. Control circuit for switching a power transistor (Tₐ) and a diode (Dₐ) reverse-mounted between two electrodes of the said transistor, characterised in that it comprises a circuit for detecting the voltage at the terminals (B1ₐ, B2ₐ) of the diode to render the said transistor (Tₐ) conducting when this voltage is below a voltage reference value (Vref) and a circuit for measuring the current passing in the said transistor (Tₐ) to render the said transistor non-conducting when the integral of this current is above a current reference value (Iref).

2. Switching control circuit according to Claim 1, characterised in that the said diode is a parasitic diode of the said transistor (Tₐ).

3. Switching control circuit according to Claim 1 or 2, characterised in that the voltage detection circuit comprises a resistive divider (3) connected between the two electrodes of the said transistor and a voltage comparator (4) connected at an input to a point (P) of the resistive divider (3) and receiving at another input the voltage reference value (Vref), to deliver at its output a signal (s1) of detection of a voltage above or below the voltage reference value.

4. Switching control circuit according to one of Claims 1 to 3, characterised in that the current measurement circuit comprises a current diversion circuit (5ₐ, 5_{b}), an integrator (6) and a current comparator (7), the current diversion circuit (5a, 5b) comprising a resistive element (5a) connected at its input to an electrode of the said transistor (Tₐ) and at its output to the input of the integrator (6), the current comparator (7) receiving at one input the current reference value (Iref) and at another input the output of the integrator (6), to deliver at its output a signal (s2) of detection of a current surface above or below the voltage reference value (Iref).

5. Switching control circuit according to Claim 4, characterised in that it comprises a logic circuit (8, 9, 10) receiving at one input the voltage detection signal (s1) and at another input the current detection signal (s2), which supplies at its output a voltage level at the gate (g) of the said transistor (Tₐ) to render it conducting for a signal of detection of a voltage below the voltage reference (Vref) and non-conducting for a signal of detection of a current surface above the said current reference (Iref).

6. Switching control circuit according to Claim 3 or 5, characterised in that it also comprises a circuit for generating a random pulse (11), the occurrence of the impulse forcing the voltage detection signal (s1) to a state corresponding to a voltage below the voltage reference (Vref) to render the said transistor (Tₐ) conducting.

7. Switching control circuit according to Claim 5 or 6, characterised in that the logic circuit comprises a bistable flip-flop (8) receiving the signal (s1') detecting voltage at an input (S) setting the output (Q) of the flip-flop to one and the signal (s2) detecting current at an input (R) setting the output (Q) of the flip-flop to (8).

8. Control circuit according to Claim 7, characterised in that the output of the flip-flop (8) controls the resetting to zero of the random pulse generator (11).

9. Switching control circuit according to Claim 6 or 7, characterised in that the logic circuit also comprises an AND gate (9) at the output (Q) of the flip-flop (8) receiving at another input the reversed voltage level detection signal (/s1), to force the gate voltage of the said transistor (Tₐ,) to a zero logic level and block the said transistor with detection of a voltage above the voltage reference (Vref).

10. Switching control circuit according to one of Claims 6 to 9, characterised in that it comprises an OR gate (10) receiving the voltage detection signal (s1) and the output of the random pulse generator (11) and delivering the command (s1') to set the flip-flop (8) to one (S)

11. Switching control circuit according to any one of the preceding claims, characterised in that it comprises a circuit for generating (12) a logic voltage (V_{L}) from the voltage between the two electrodes of the said transistor, and which delivers the logic voltage at a terminal (B3) for the logic supply of the switching control circuit.

12. Switching control circuit according to any one of the preceding claims, characterised in that the power transistor is a MOSFET transistor.

13. Integrated circuit, characterised in that it includes the transistor, the diode and the switching control circuit according to any one of the preceding claims.

14. Control device for a low-pressure fluorescent lamp (F), characterised in that it comprises two switching control circuits (Comₐ, Com_{b}) for a power transistor (Tₐ, T_{b}) according to any one of the preceding claims, placed in series between a high voltage and earth, an inductance (L), the low-pressure fluorescent lamp (F) and a capacitor (Cs) being connected in series between the mid-point (M) of the two switching circuits (Comₐ, Com_{b}) and earth and a starting capacitor (Cp) being provided in parallel to the said lamp (F).

15. Control device according to Claim 14, characterised in that, for each switching control circuit (Comₐ), a bypass capacitor (Cₐ) is connected between the logic supply terminal (B3ₐ) and earth to maintain the logic voltage level (V_{L}) all the time the corresponding switching control circuit (Comₐ) is in the closed state.
